# FASCICULE DE BREVET EUROPEEN

(11) **EP 2 188 744 B1**
(45) Date de publication et mention de la délivrance du brevet: **13.03.2019**
(21) Numéro de dépôt: 08835732.2
(22) Date de dépôt: 11.09.2008
(51) Int. Cl.: G06F 17/30

(54) **INSTALLATION DE GESTION D'UNE BASE DE DONNÉES**
ANLAGE ZUR VERWALTUNG EINER DATENBANK
INSTALLATION FOR MANAGING A DATABASE

(30) Priorité: 11.09.2007 FR 0757498
(43) Date de publication de la demande: 26.05.2010
(73) Titulaire: ENABLON, 92400 Courbevoie (FR)
(72) Inventeur: VOGEL, Marc, 92420 Vaucresson (FR); VOGEL, Dan, 92420 Vaucresson (FR)
(74) Mandataire: Lavoix
(86) Numéro de dépôt international: PCT/FR2008/051627
(87) Numéro de publication internationale: WO 2009/044087

(56) Documents cités:
- US-A1- 2004 122 646
- US-A1- 2007 203 892
- US-B1- 6 480 857

## Description

La présente invention concerne une installation d'interrogation de gestion d'une base de données comportant :
a/ une base de données comprenant :
   a1/ des moyens de filtrage des données contenues dans des champs à partir d'algorithmes internes d'optimisation de la base de données propres à fournir les données recherchées en réponse à une requête définissant le filtre ; et
   a2/ au moins une hiérarchie de données de au moins trois niveaux hiérarchiques et
b/ des moyens d'interrogation propres à fournir au moins une requête définissant un filtre permettant la sélection des données recherchées par mise en oeuvre des moyens de filtrage.

De nos jours, les bases de données sont utilisées pour stocker un très grand nombre de données issues de sources multiples. Il est connu que ces données soient stockées dans des tables comportant chacune plusieurs champs, ces tables étant définies par le modèle de données. Des relations sont établies et mémorisées dans la base de données entre les champs des différentes tables.

Les bases de données relationnelles contrairement aux bases de données multidimensionnelles n'offrent pas d'objets standard pour représenter directement des hiérarchies. Une hiérarchie ou dimension, termes sensiblement équivalents dans le monde des bases de données multidimensionnelles, permet de représenter des dépendances d'éléments sur plusieurs niveaux hiérarchiques. Par exemple, dans une hiérarchie de type géographique, au premier niveau se trouvent les continents, ensuite les pays, puis les villes. Ainsi, la ville Paris se trouve au troisième niveau, les second et premier étant respectivement France et Europe.

Une telle hiérarchie est couramment représentée sous la forme d'un arbre dont les noeuds fils sont hiérarchiquement à un niveau inférieur aux noeuds parents dont ils dépendent.

L'intérêt d'introduire le concept de hiérarchie dans une base de données est de pouvoir effectuer des changements d'échelle. Par exemple si la base de données relationnelles contient une liste des ventes d'un produit par ville du monde entier, il peut être intéressant de filtrer, de cette liste, toutes les ventes associées à une région du monde en particulier, par exemple l'Europe.

Dans l'état de la technique, plusieurs approches sont connues pour traiter ce sujet de la gestion des hiérarchies. Elles peuvent être résumées comme suit.

### *Approche par une base multidimensionnelle

Cette première approche consiste à représenter la hiérarchie ainsi que la liste des ventes dans une base de données multidimensionnelles. Cependant, les bases de données multidimensionnelles sont en général complexes à mettre en oeuvre et elles ne présentent pas certaines fonctionnalités qui n'existent que dans le monde des bases de données relationnelles. Cette perte peut devenir un grand inconvénient car il implique un choix structurel fort ayant des conséquences en termes de fonctions, de performances, de coûts, si le besoin de gérer des structures à plusieurs niveaux n'est que ponctuel et ne constitue pas la finalité première du produit.

Une variante de cette approche consiste à utiliser des connecteurs OLAP ( Online Analytical Processing) qui permettent d'interroger une base de données relationnelles avec des requêtes multidimensionnelles. Les inconvénients sont que les connecteurs OLAP ne sont pas disponibles pour tous les moteurs de base de données relationnelles et que leur performance est réduite du fait qu'ils doivent passer par des étapes de retravail des données pour effectuer des analyses multidimensionnelles.

### * Approche bases de données relationnelles avec le modèle de données typiquement utilisé.

La deuxième approche consiste à représenter la hiérarchie ainsi que la liste de ventes dans une base de données relationnelles classique. Toutefois, cette dernière ne sert que pour le stockage. Tout le travail de filtrage est réalisé par un algorithme spécialisé par le programme informatique qui traite ces données. Cet algorithme n'est pas mis en oeuvre par le moteur de la base de données. Cette approche présente l'inconvénient de récupérer l'intégralité des données ou de multiplier le nombre de requêtes vers la base de données et donc de réduire les performances. Dans le cas d'une liste de ventes en Europe, il convient de récupérer les données de toutes les villes même celles hors d'Europe pour ensuite filtrer celles qui sont recherchées ou de multiplier le nombre de requêtes comme exposé plus loin.

Le modèle de données pour les deux tables est alors par exemple le suivant :

**Table représentant la hiérarchie**

| **Identifiant** noeud de la hiérarchie | **Libellé** | Identifiant du **Parent** selon la hiérarchie |
|---|---|---|
| 1 | Europe | 0 |
| 2 | France | 1 |
| 3 | Allemagne | 1 |
| 4 | Paris | 2 |
| 5 | Berlin | 3 |
| 6 | Lyon | 2 |
| 7 | Amerique du Nord | 0 |
| 8 | Etats Unis | 7 |
| 9 | Washington | 8 |
| 10 | New York | 8 |

**Table représentant les ventes**

| **Identifiant** noeud Ville dans la hiérarchie | **Montant** |
|---|---|
| 4 (Paris) | 3 |
| 5 (Berlin) | 7 |
| 6 (Lyon) | 4 |
| 9 (Washington) | 8 |
| 10 (New York) | 11 |

La structure de la table représentant la hiérarchie est la structure la plus compacte qu'on puisse utiliser pour représenter une hiérarchie mais elle ne permet pas à la seule base de données, c'est-à-dire en utilisant seulement une requête SQL, de répondre à une question simple telle que « quelles sont les villes en Europe ? ».

En effet, beaucoup de traitements doivent être réalisés directement dans l'application pour compenser les limites de la base de données. Par exemple, une approche pour répondre à la question ci-dessus consiste en multipliant les requêtes dans la base de données à déterminer à l'avance tous les pays présents en Europe et puis ensuite à déterminer toutes les villes existant en France et en Allemagne (ici Paris, Lyon puis Berlin). Ensuite un premier choix consiste à effectuer plusieurs requêtes du type ("quelles sont les ventes sur Paris ?", "quelles sont les ventes sur Lyon ?" et "quelles sont les ventes sur Berlin?") pour extraire les ventes associées à chaque ville. La contrepartie est que les performances peuvent rapidement se dégrader si le nombre de villes se compte en centaines ou en milliers. Ensuite, la complexité du code source en souffrira, notamment en fusionnant les résultats et/ou éventuellement en réordonnant si l'on souhaite avoir les ventes par montants croissants. Pour éviter de multiplier les requêtes on peut également construire une requête unique impliquant des opérateurs « IN » et « OR » utilisés pour filtrer sur toutes les villes qui ont été identifiées précédemment. Cependant, cela présente les inconvénients suivants :
* certains moteurs de base de données ont des limites sur le nombre de caractères maximal autorisés pour des requêtes SQL. La requêtes SQL pouvant grandir rapidement ici si le nombre de villes concernées dépasse les milliers.
* certains moteurs de base de données ont des limites quant au nombre d'opérateurs « OR » autorisés dans une requête. Par ailleurs multiplier le nombre d'opérateurs « OR » dégrade les performances.
* certains moteurs de base de données ont des limites quant au nombre d'éléments pouvant être inclus dans une clause « IN». Par ailleurs multiplier le nombre d'éléments dans une clause « IN » dégrade les performances.
* du fait que la requête SQL est générée dynamiquement, il devient impossible d'utiliser les requêtes « SQL à paramètres pré compilées » ou « des procédures stockées » et donc de bénéficier des grands gains de performances associés.

Une autre alternative consiste à réaliser une jointure de la table qui contient la hiérarchie avec elle-même et de répéter ces jointures autant de fois que la donnée recherchée est éloignée du sommet de la hiérarchie. Cette alternative présente les inconvénients suivants :
- le nombre de jointures qui peuvent être réalisées dans le cadre d'une même requête est souvent limité par la base de données limitant dès lors le nombre de niveaux maximum d'une hiérarchie
- les jointures sont des opérations complexes, les multiplier en grand nombre dégrade les performances
- l'écriture de la requête peut se révéler très complexe (multiplication du nombre de jointures) et son traitement très lourd si dans la même requête, les données recherchées ont des niveaux hiérarchiques différents.
- du fait que le nombre de jointure à effectuer n'est pas connu à l'avance car il dépend du niveau hiérarchique de la données recherchée, il n'est pas possible d'utiliser ici aussi les requêtes SQL à « paramètres pré compilé » ou « procédures stockées ».

Le document US6480857 B1 publié le 12 novembre 2002 décrit une installation de gestion de base de données comportant des moyens pour représenter une table de hiérarchie de données. Dans ce document il n'y a qu'un seul enregistrement pour chacune des données hiérarchisées.

L'invention a donc pour but de permettre un traitement de données hiérarchisée dans une base de données relationnelles qui ne nécessite pas d'outils logiciels complexes supplémentaires et qui puisse permettre un filtrage rapide et sur des données hiérarchisées et ce en une seule requête SQL.

A cet effet, l'invention a pour objet une installation du type précité, caractérisée en ce qu'elle comporte des moyens pour représenter une table de hiérarchie comprenant, pour chaque donnée hiérarchisée, l'ensemble des données dont elle est dépendante, quel que soit le nombre de niveaux hiérarchiques les séparant, chacune des données dont elle est dépendante étant contenue dans un enregistrement séparé de la table contenant en outre la donnée hiérarchisée ; et
en ce que lors d'une interrogation à partir d'une requête portant sur des données hiérarchisées, les moyens de filtrage de la base de données sont adaptés pour fournir une réponse à la requête formulée à partir de la table de hiérarchie sans recours à des outils d'interrogation multidimensionnelle de la base de données extérieurs à la base de données.

Le problème est ainsi résolu de manière performante en tirant partie des mécanismes d'optimisation du moteur de base de données (indexes, « hash tables », recherche en parallèles, etc...).

La solution est ainsi apportée en représentant la hiérarchie dans une table de la base de données relationnelles classique dans un format tel que la base de données soit capable elle-même de filtrer les données en utilisant ses propres algorithmes d'optimisation interne et ce sur la base d'une simple requête SQL.

Suivant des modes particuliers de réalisation, l'installation comporte l'une ou plusieurs des caractéristiques suivantes :
- les moyens de filtrage de la base de données comportent des procédures stockées et/ou des requêtes paramétrées,
- les moyens de filtrage sont propres à fournir les données recherchées en réponse à une requête faite en langage SQL,
- la base de données est une base de données relationnelle dont au moins une table contient des relations entre les champs des tables différentes,
- les moyens de filtrage comportent des moyens d'indexation de la table de hiérarchie,
- les moyens de filtrage de la base de données sont adaptés pour fournir une réponse à la requête formulée à partir des seules tables contenues dans la base et de la table de hiérarchie,
- la table de hiérarchie comprend, pour chaque enregistrement, un indicateur de degré de parenté représentatif de l'écart entre le niveau hiérarchique de la donnée hiérarchisée et le niveau de la donnée hiérarchisée dont elle est dépendante,
- la table de hiérarchie comprend, pour chaque donnée hiérarchisée, un enregistrement, dont l'indicateur de degré de parenté est nul et dans lequel la donnée hiérarchisée et la donnée hiérarchisée dont elle est dépendante sont identiques,
- la table de hiérarchie comprend, pour chaque enregistrement, un indicateur de niveau de profondeur hiérarchique représentatif de l'écart entre le niveau hiérarchique de la donnée hiérarchisée et le niveau le plus élevé des données hiérarchisées dont elle est dépendante, et
- elle comporte au moins une table qui décrit au moins certaines des données hiérarchisées.

L'invention sera mieux comprise à la lecture de la description qui va suivre, donnée uniquement à titre d'exemple et faite en se référant aux dessins, sur lesquels :
- la figure 1 est une vue schématique d'une installation de gestion de base de données selon l'invention ; et
- la figure 2 est une illustration d'un arbre montrant l'organisation d'un exemple de données hiérarchisées.

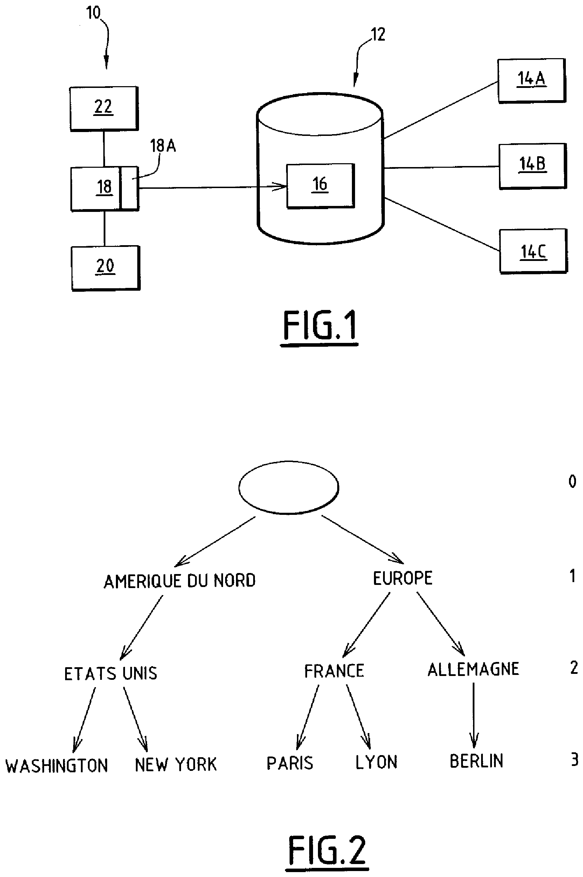

Sur la figure 1 est illustrée une installation 10 de gestion de base de données relationnelles comportant notamment des données hiérarchisées. Elle comporte une base de données relationnelles 12 comprenant un ensemble de tables 14A, 14B, 14C, par exemple au nombre de trois et un moteur 16 de gestion de base de données.

Chaque table comporte un ensemble de champs. Certains champs des différentes tables sont reliés entre eux par des relations.

Le moteur 16 de gestion de base de données comprend, comme connu en soi, des moyens de filtrage des données contenues dans les champs des tables à partir d'algorithmes internes d'optimisation de la base de données relationnelles propres à fournir les données recherchées en réponse à une requête définissant le filtre. Dans le mode réalisation envisagé, les requêtes sont des requêtes SQL. Le moteur de gestion 16 est formé par exemple d'un serveur mettant en oeuvre un logiciel adapté tel que Microsoft Sql Server, Oracle, MySQL, etc...

Le moteur de gestion de base de données comporte des procédures stockées et/ou des requêtes paramétrées, c'est-à-dire des requêtes à paramètres déjà pré-compilées dont seuls certains paramètres sont modifiés. Ces procédures stockées et/ou des requêtes paramétrées sont susceptibles d'être effectuées rapidement compte tenu de leur nature.

L'installation comprend en outre des moyens 18 d'interrogation de la base de données formés de moyens 20 de saisie d'au moins une requête définissant un filtre permettant la sélection des données recherchées.

Ces moyens d'interrogation 18 sont formés par exemple d'un ordinateur mettant en oeuvre des logiciels applicatifs adaptés et relié au serveur 16. Ce logiciel est par exemple un outil de gestion des ventes, un logiciel de gestion de titres et participations, un logiciel de représentation de hiérarchies de personnes, de produits, etc...

Les moyens d'interrogation 18 comportent dans le logiciel applicatif des moyens 18A de génération d'une table de hiérarchie 14C ayant une structure spécifique précisée ultérieurement. Cette table de hiérarchie 14C décrit sous un format particulier et redondant les hiérarchies entre les données. Le module logiciel constituant ces moyens d'interrogation est propre à fournir la table de hiérarchie à partir des données hiérarchisées sur lesquelles portent les traitements et à modifier cette table à chaque modification des données hiérarchisées.

Les moyens d'interrogation 18 comportent en outre un module logiciel d'interrogation de la base 12 à partir de requêtes SQL mises en oeuvre par le moteur 16. Ce module est désigné par requêteur SQL. Ce module est propre à formuler des requêtes au format SQL et à les adresser au serveur 16 pour qu'il extraie de la base de données relationnelles 12 les données recherchées correspondant aux requêtes.

Les moyens de saisie 20 constitués par exemple d'un clavier et d'un éditeur de requête permettant la formulation de requêtes SQL suivant un format prédéfini.

Enfin, les moyens 18 comportent un module 22 de mise à disposition des données recueillies en réponse aux requêtes SQL formulées. Il s'agit par exemple d'un écran d'affichage de l'ordinateur ou de moyens de sauvegarde des données extraites.

Les tables de la base de données comprennent par exemple une table 14A des ventes comprenant deux champs à savoir un Identifiant représentant un lieu de vente, notamment une ville, et un montant de ventes associé au lieu de vente.

Cette table 14A est par exemple sous la forme suivante :

**Table des Ventes**

| **Identifiant** noeud Ville dans la hiérarchie | **Montant** |
|---|---|
| 4 (Paris) | 3 |
| 5 (Berlin) | 7 |
| 6 (Lyon) | 4 |
| 9 (Washington) | 8 |
| 10 (New York) | 11 |

En outre, une autre table 14B renferme une description des lieux de vente (identifiant, libellé, adresse, habitants) sans tenir de leur position dans la hiérarchie des entités géographiques.

Ainsi, cette table 14B comporte par exemple, quatre champs formés :
- d'un identifiant numérique de chaque lieu de vente
- d'un libellé comportant le nom du lieu de vente
- d'une adresse du magasin du lieu de vente, et
- du nombre d'habitants du lieu de vente.

Cette table 14B est par exemple sous la forme suivante.

**Table des Entités de la hiérarchie**

| **Identifiant** | **Libellé** | **Adresse** Magasin | **Habitants** |
|---|---|---|---|
| 1 | Europe | N/A | N/A |
| 2 | France | N/A | N/A |
| 3 | Allemagne | N/A | N/A |
| 4 | Paris | 3 rue des Champs Elysées | 5 000 000 |
| 5 | Berlin | 5 Wolfenstein Strasse | 6 000 000 |
| 6 | Lyon | 4 rue des Prés | 1 000 000 |
| 7 | Amerique du Nord | N/A | N/A |
| 8 | Etats-Unis | N/A | N/A |
| 9 | Washington | 2001 Capitol Hill | 5 000 000 |
| 10 | New York | 42th Street | 8 000 000 |

Enfin, une autre table 14 C, représente un arbre tel que décrit ci-dessous : Les données hiérarchisées sont représentées sous la forme d'un arbre tel qu'illustré sur la figure 2, dans lequel chaque donnée correspond à un noeud de l'arbre. Les données sont ainsi chacune associées à un niveau hiérarchique qui définit la profondeur d'une donnée par rapport à la racine de l'arbre. Le niveau est indiqué dans la partie droite de l'arbre. Les flèches sont orientées dans le sens des niveaux hiérarchiques croissants par convention du parent vers les fils. Une première donnée de l'arbre est dite dépendante d'une seconde donnée si soit cette deuxième donnée est son père soit si son père est dépendante de cette deuxième donnée. Lorsque deux données sont dépendantes le nombre de niveaux hiérarchiques les séparant représente le degré de parenté.

Chaque donnée de cet arbre est traduite dans la table 14C de hiérarchie par plusieurs enregistrements, avec un enregistrement pour chaque dépendance qui existe avec une autre donnée de l'arbre.

En d'autres termes, la table de hiérarchie 14C contient pour chaque noeud de la hiérarchie quels autres noeuds sont ses parents directs ou indirects. Plus précisément, pour toutes les données hiérarchisées, un enregistrement est contenu dans la table pour chaque donnée dont elle est dépendante. Chaque enregistrement contient la donnée hiérarchisée et la donnée dont elle est dépendante.

La table de hiérarchie 14C contient ainsi de préférence quatre champs correspondants respectivement à :
- un identifiant du lieu de vente ;
- un degré de parenté, c'est-à-dire l'écart entre le niveau hiérarchique de la donnée hiérarchisée et le niveau de la donnée hiérarchisée dont elle est dépendante ;
- un identifiant de la donnée hiérarchisée dont la donnée dépend, ceci éventuellement afin de simplifier davantage certains requêtes SQL et d'offrir encore de meilleures performance ; et
- un niveau de profondeur hiérarchique "profondeur" représentatif de l'écart entre le niveau hiérarchique de la donnée hiérarchisée, et le niveau le plus élevé des données hiérarchisées dont elle est dépendante.

**Table 14 C représentant les relations hiérarchie (Noeuds)**

| **Identifiant** du lieu de vente | **Degré** de parenté | Identifiant du **Parent** selon la hiérarchie | **Profondeur** |
|---|---|---|---|
| 1 (Europe) | 0 | 1 (Europe) | 1 |
| 1 (Europe) | 1 | 0 (Racine) | 1 |
| 2 (France) | 0 | 2 (France) | 2 |
| 2 (France) | 1 | 1 (Europe) | 2 |
| 2 (France) | 2 | 0 (Racine) | 2 |
| 3 (Allemagne) | 0 | 3 (Allemagne) | 2 |
| 3 (Allemagne) | 1 | 1 (Europe) | 2 |
| 3 (Allemagne) | 2 | 0 (Racine) | 2 |
| 4 (Paris) | 0 | 4 (Paris) | 3 |
| 4 (Paris) | 1 | 2 (France) | 3 |
| 4 (Paris) | 2 | 1 (Europe) | 3 |
| 4 (Paris) | 3 | 0 (Racine) | 3 |
| 5 (Berlin) | 0 | 5 (Berlin) | 3 |
| 5 (Berlin) | 1 | 3 (Allemagne) | 3 |
| 5 (Berlin) | 2 | 1 (Europe) | 3 |
| 5 (Berlin) | 3 | 0 (Racine) | 3 |
| 6 (Lyon) | 0 | 6 (Lyon) | 3 |
| 6 (Lyon) | 1 | 2 (France) | 3 |
| 6 (Lyon) | 2 | 1 (Europe) | 3 |
| 6 (Lyon) | 3 | 0 (Racine) | 3 |
| 7 (Amérique de Nord) | 0 | 7 (Amérique de Nord) | 1 |
| 7 (Amérique de Nord) | 1 | 0 (Racine) | 1 |
| 8 (Etats Unis) | 0 | 8 (Etats Unis) | 2 |
| 8 (Etats Unis) | 1 | 7 (Amérique de Nord) | 2 |
| 8 (Etats Unis) | 2 | 0 (Racine) | 2 |
| 9 (Washington) | 0 | 9 (Washington) | 3 |
| 9 (Washington) | 1 | 8 (Etats Unis) | 3 |
| 9 (Washington) | 2 | 7 (Amérique de Nord) | 3 |
| 9 (Washington) | 3 | 0 (Racine) | 3 |
| 10 (New York) | 0 | 10 (New York) | 3 |
| 10 (New York) | 1 | 8 (Etats Unis) | 3 |
| 10 (New York) | 2 | 7 (Amérique de Nord) | 3 |
| 10 (New York) | 3 | 0 (Racine) | 3 |

Le degré de parenté correspond à la distance en terme de génération entre les éléments des colonnes 1 et 3. Les enregistrements avec le degré 0 de parenté sont tels que les colonnes 1 et 3 sont identiques. Dans cet exemple, chaque noeud est ainsi couplé dans cet exemple à jusqu'à trois de ses noeuds parents.

A partir d'une simple requête SQL, il est possible d'exploiter la hiérarchie entre les données. En effet, une unique requête SQL suffit pour exploiter la hiérarchie puisqu'elle recourt alors au seul moteur de données 16 qui comporte des algorithmes optimisés propres de recherche dans la base de données relationnelles (indexes, « hash tables », recherche en parallèles, etc...). En outre, comme exposé dans les exemples présentés plus loin, la structure de la requêtes SQL ne dépend du nombre de données à extraire, il est également possible de tirer de procédures stockées ou requêtes SQL pré compilées afin d'obtenir des gains de performance supplémentaires.

On pourrait craindre que dans un tel modèle de données, la table des hiérarchies soit nécessairement de grande taille : le nombre d'enregistrements étant majoré par la valeur n*d avec n le nombre de noeuds et d la profondeur maximale. Cependant, cela n'est pas très contraignant compte tenu du gain observé et dans la mesure où le facteur qui fait grossir est « d » et empiriquement dans le cas de la plupart des hiérarchies observées, il dépasse très rarement la valeur de 10 et l'ordre de grandeur de « n » (par exemple nombre de pays) dépasse rarement les milliers. Ainsi une hiérarchie de 1000 données et de profondeurs maximum 10, ne pourra jamais dépasser 10000 enregistrements.

Il est alors possible simplement de répondre aux questions suivantes à partir de simples requêtes SQL.
- quel est le grand-père (Continent) de la ville Paris (Id=4)?
   SELECT Parent FROM Noeuds WHERE Degré=2 AND Identifiant=4
   Cette requête renvoie : Europe
- quels sont tous les éléments (Continent+Pays+Villes) contenus en Europe (ld=1) ?
   SELECT Identifiant FROM Noeuds WHERE Parent=1
   Cette requête renvoie : Europe, France, Allemagne, Paris, Berlin, Lyon
- quels sont les villes contenues en Europe (Id=1) ?
   SELECT Identifiant FROM Noeuds WHERE Parent=1 AND Degré=2
   La partie « degré=2 » permet de se débarrasser des éléments du type Pays et de ne garder que les Villes
   Cette requête renvoie : Paris, Lyon, Berlin
- quelle est la liste des ventes réalisées en Europe (ld=1) ?
   SELECT Ventes.Identifiant, Ventes.Montant FROM Noeuds, Ventes WHERE Ventes.Identifiant=Noeuds.Identifiant AND Noeuds.Parent=1 AND Noeuds.Deg ré=2
   Cette requête renvoie : 4 **(=Paris),3** et 6 **(=Lyon),** 4 et 5 **(=Berlin), 7**
- quelle est la liste des ventes réalisées en Europe (ld=1) et à NewYork (Id=10) ?
   SELECT Ventes. Identifiant, Ventes.Montant FROM Noeuds, Ventes WHERE Ventes.Identifiant=Noeuds.Identifiant AND Noeuds.Parent IN (1,10) AND Noeuds.Degré=2
   Cette requête illustre qu'il est possible avec grande facilité, c'est-à-dire sans rajouter de jointures supplémentaires ou de complexifier la requête de réaliser en même temps des interrogations sur des données situés à des niveaux hiérarchiques différents (ici Europe et New York)
- quelle est la somme des ventes réalisées en Europe (ld=1) ?
   SELECT SUM(Ventes.Montant) FROM Noeuds, Ventes WHERE Ventes. Identifiant=Noeuds.ldentifiant AND AND Noeuds.Degré=2
   Du fait de l'utilisation seulement d'une base de données relationnelles, il est possible de réaliser facilement des jointures dans la même requête SQL pour récupérer des valeurs provenant d'autres tables ou pour poser des questions portant sur des critères extérieurs. Il est ainsi possible de répondre aux questions suivantes :
- quelle est la liste (avec adresse) des ventes réalisées en Europe (ld=1) ?
   SELECT Entités.Adresse, Ventes. Identifiant, Ventes.Montant FROM Noeuds,Ventes, Entités WHERE Ventes.Identifiant=Noeuds.Identifiant AND Noeuds.P arent=1 AND Noeuds.Degré=2 AND Entités.Identifiant=Noeuds.Identifiant
- quelle est la liste (avec adresse) des ventes réalisées dans les villes d'Europe (ld=1) de plus de 3 millions d'habitants ?
   SELECT Entités.Adresse, Ventes. Identifiant, Ventes.Montant FROM Noeuds, Ventes, Entités WHERE Ventes.Identifiant=Noeuds.Identifiant AND AND Noeuds.Degré=2 AND Entités.Identifiant=Noeuds.Identifiant AND Entités.Habitants>=3 000 000

Il est à noter que pour permettre d'autres requêtes, il est avantageusement prévu dans la table des Noeuds une colonne "profondeur" qui contrairement à la colonne Degré permet des recherches portant sur la profondeur d'un élément par rapport au haut de la hiérarchie. Cette colonne permet de simplifier les requêtes SQL mais elle n'est pas indispensable car il est possible d'obtenir des résultats similaires par jointure supplémentaire.

Les autres avantages suivants sont obtenus :
- l'approche est utilisable pour toute base de données SQL car elle n'utilise pas de spécificité particulière ;
- la requête est réalisée en une seule passe, et le développeur n'a pas à fusionner les résultats de multiples requêtes ;
- ce modèle de données permet de gérer un nombre quelconque de niveaux dans une hiérarchie avec des branches de profondeurs différentes ; et
- une optimisation des accès à la base données peut être simplement obtenue grâce à l'ajout d'indexes sur un plusieurs ou champs de la table 14C.

## Revendications

1. Installation (10) de gestion d'une base de données comportant :
a/ une base de données (12) comprenant :
a1/ des moyens (16) de filtrage des données contenues dans des champs à partir d'algorithmes internes d'optimisation de la base de données propres à fournir les données recherchées en réponse à une requête définissant le filtre ; et
a2/ au moins une hiérarchie de données de au moins trois niveaux hiérarchiques ; et
b/ des moyens (18) d'interrogation propres à fournir au moins une requête définissant un filtre permettant la sélection des données recherchées par mise en oeuvre des moyens de filtrage (16);
**caractérisée en ce qu'**elle comporte des moyens pour représenter une table de hiérarchie (14C) comprenant, pour chaque donnée hiérarchisée :
l'ensemble des données dont elle est dépendante, quel que soit le nombre de niveaux hiérarchiques les séparant, chacune des données dont elle est dépendante étant contenue dans un enregistrement séparé de la table, le dit enregistrement contenant en outre la donnée hiérarchisée ; et
un indicateur de degré de parenté représentatif de l'écart entre le niveau hiérarchique de la donnée hiérarchisée et le niveau de chaque donnée hiérarchisée dont elle est dépendante et un indicateur de niveau de profondeur hiérarchique représentatif de l'écart entre le niveau hiérarchique de la donnée hiérarchisée et le niveau le plus élevé des données hiérarchisées dont elle est dépendante,
et **en ce que**, lors d'une interrogation à partir d'une requête portant sur des données hiérarchisées et définissant un filtre intégrant l'indicateur de degré de parenté et/ou l'indicateur de niveau de profondeur hiérarchique, les moyens (16) de filtrage de la base de données sont adaptés pour fournir une réponse à la requête formulée à partir de la table de hiérarchie (14C) sans recours à des outils d'interrogation multidimensionnelle de la base de données extérieurs à la base de données.

2. Installation selon la revendication 1, **caractérisée en ce que** le les moyens (16) de filtrage de la base de données comportent des procédures stockées et/ou des requêtes paramétrées.

3. Installation selon la revendication 1 ou 2, **caractérisée en ce que** les moyens de filtrage (16) sont propres à fournir les données recherchées en réponse à une requête faite en langage SQL.

4. Installation selon l'une quelconque des revendications précédentes, **caractérisée en ce que** la base de données est une base de données relationnelle dont au moins une table (14A, 14B) contient des relations entre les champs des tables différentes.

5. Installation selon la revendication 4, **caractérisée en ce que** les moyens (16) de filtrage comportent des moyens d'indexation de la table de hiérarchie (14C).

6. Installation l'une quelconque des revendications précédentes, **caractérisée en ce que** les moyens (16) de filtrage de la base de données sont adaptés pour fournir une réponse à la requête formulée à partir des seules tables (14A, 14B) contenues dans la base et de la table de hiérarchie (14C).

7. Installation selon la revendication 1, **caractérisée en ce que** la table de hiérarchie (14C) comprend, pour chaque donnée hiérarchisée, un enregistrement, dont l'indicateur de degré de parenté est nul et dans lequel la donnée hiérarchisée et la donnée hiérarchisée dont elle est dépendante sont identiques.

8. Installation selon l'une quelconque des revendications précédentes, **caractérisée en ce qu'**elle comporte au moins une table (14B) qui décrit au moins certaines des données hiérarchisées.

## Patentansprüche

1. Einrichtung (10) zur Verwaltung einer Datenbank aufweisend:
a/ eine Datenbank (12) aufweisend:
a1/ Mittel (16) zum Filtern von in Feldern enthaltenden Daten ausgehend von internen Algorithmen zum Optimieren der Datenbank, geeignet zum Liefern der recherchierten Daten in Antwort auf eine Anfrage, die den Filter definiert; und
a2/ mindestens eine Hierarchie von Daten mit mindestens drei hierarchischen Ebenen; und
b/ Mittel (18) zum Abfragen, geeignet zum Liefern mindestens einer Anfrage, die einen Filter definiert, der die Auswahl der recherchierten Daten durch Ausführung von Filtermitteln (16) ermöglicht;
dadurch charakterisiert, dass sie Mittel zum Repräsentieren einer Hierarchie-Tabelle (14C) aufweist, die für jedes hierarchisch eingegliederte Datenelement aufweist:
die Menge von Daten, von denen es abhängt, wie auch die Anzahl von Hierarchie-Ebenen sei, die sie trennt, wobei jedes Datenelement der Daten, von dem es abhängt, in einem Datensatz separat von der Tabelle enthalten ist, wobei der Datensatz außerdem das hierarchisch eingegliederte Datenelement enthält; und
einen Indikator des Verwandtschaftsgrads, der den Abstand zwischen der Hierarchie-Ebene des hierarchisch eingegliederten Datenelements und der Ebene jedes hierarchisch eingegliederten Datenelements, von dem es abhängt, repräsentiert, und einen Indikator der hierarchischen Tiefenstufe, der den Abstand zwischen der Hierarchie-Ebene des hierarchisch eingegliederten Datenelements und der höchsten Ebene der hierarchisch eingegliederten Daten, von denen es abhängt, repräsentiert,
und dadurch, dass bei einer Abfrage ausgehend von einer Anfrage, die bezüglich der hierarchisch eingegliederten Daten ist und einen Filter definiert, der den Indikator des Verwandtschaftsgrads und/oder den Indikator der hierarchischen Tiefenstufe integriert, die Mittel (16) zum Filtern der Datenbank eingerichtet sind, eine Antwort auf die Anfrage, die ausgehend von der Hierarchie-Tabelle (14C) ohne Rückgriff auf Werkzeuge zur multidimensionalen Abfrage der Datenbank, die extern bezüglich der Datenbank sind, formuliert ist, zu liefern.

2. Einrichtung gemäß Anspruch 1, dadurch charakterisiert, dass die Mittel (16) zum Filtern der Datenbank gespeicherte Prozeduren und/oder parametrisierte Anfragen aufweisen.

3. Einrichtung gemäß Anspruch 1 oder 2, dadurch charakterisiert, dass die Mittel (16) zum Filtern geeignet sind, die recherchierten Daten in Antwort auf eine in SQL-Sprache gemachte Anfrage zu liefern.

4. Einrichtung gemäß einem der vorhergehenden Ansprüche, dadurch charakterisiert, dass die Datenbank eine relationale Datenbank ist, von der mindestens eine Tabelle (14A, 14B) Relationen zwischen den Feldern der verschiedenen Tabellen aufweist.

5. Einrichtung gemäß Anspruch 4, dadurch charakterisiert, dass die Mittel (16) zum Filtern Mittel zum Indizieren der Hierarchie-Tabelle (14C) aufweisen.

6. Einrichtung gemäß einem der vorhergehenden Ansprüche, dadurch charakterisiert, dass die Mittel (16) zum Filtern der Datenbank eingerichtet sind, eine Antwort auf die Anfrage, die ausgehend von den einzigen Tabellen (14A, 14B), die in der Datenbank enthalten sind, und der Hierarchie-Tabelle (14C) formuliert ist, zu liefern.

7. Einrichtung gemäß Anspruch 1, dadurch charakterisiert, dass die Hierarchie-Tabelle (14C) aufweist, für jedes hierarchisch eingegliederte Datenelement, einen Datensatz, für den der Indikator des Verwandtschaftsgrads Null ist und in dem das hierarchisch eingegliederte Datenelement und das hierarchisch eingegliederte Datenelement, von dem es abhängt, identisch sind.

8. Einrichtung gemäß einem der vorhergehenden Ansprüche, dadurch charakterisiert, dass es mindestens eine Tabelle (14B) aufweist, die mindestens bestimmte der hierarchisch eingegliederten Daten beschreibt.

## Claims

1. Installation (10) for managing a database having:
a/ a database (12) comprising:
a1/ means (16) for filtering the data contained in fields using internal algorithms for optimising the database which are capable of providing the data sought in response to a query defining the filter; and
a2/ at least one data hierarchy of at least three hierarchical levels; and
b/ interrogation means (18) capable of providing at least one query defining a filter permitting the selection of the data sought by using the filtering means (16);
**characterised in that** said installation has means for representing a hierarchy table (14C) comprising, for each hierarchised datum:
all of the data on which said hierarchised datum is dependent, regardless of the number of hierarchical levels separating them, each of the data on which said hierarchised datum is dependent being contained in a separate record of the table, said record further containing the hierarchised datum; and
an indicator of the degree of relationship representing the distance between the hierarchical level of said hierarchised datum and the level of each hierarchised datum on which said hierarchised datum is dependent and an indicator of the level of hierarchical depth representing the distance between the said hierarchical level of the hierarchised datum and the highest level of the hierarchised data on which said hierarchised datum is dependent,
and **in that**, during an interrogation on the basis of a query pertaining to hierarchised data and defining a filter comprising the indicator of the degree of relationship and/or indicator of the level of hierarchical depth, the filtering means (16) of the database are suitable for providing a response to the query formulated on the basis of the hierarchy table (14C) without resorting to tools for the multidimensional interrogation of the database that are external to the database.

2. Installation according to claim 1, **characterised in that** the filtering means (16) of the database comprise stored procedures and/or parameterised queries.

3. Installation according to claim 1 or 2, **characterised in that** the filtering means (16) are capable of providing the data sought in response to a query executed in SQL language.

4. Installation according to any one of the preceding claims, **characterised in that** the database is a relational database, at least one table (14A, 14B) of which contains relationships between the fields of the various tables.

5. Installation according to claim 4, **characterised in that** the filtering means (16) comprise means for indexing the hierarchy table (14C).

6. Installation according to any one of the preceding claims, **characterised in that** the filtering means (16) of the database are suitable for providing a response to the query formulated on the basis of only the tables (14A, 14B) contained in the database and on the basis of the hierarchy table (14C).

7. Installation according to claim 1, **characterised in that** the hierarchy table (14C) comprises, for each hierarchised datum, a record, of which the indicator of the degree of relationship is zero and in which the hierarchised datum and the hierarchised datum on which said hierarchised datum is dependent are identical.

8. Installation according to any one of the preceding claims, **characterised in that** it comprises at least one table (14B) which describes at least some of the hierarchised data.
